# EUROPÄISCHE PATENTSCHRIFT

(11) **EP 1 061 422 B1**
(45) Veröffentlichungstag und Bekanntmachung des Hinweises auf die Patenterteilung: **18.01.2006**
(21) Anmeldenummer: 99810520.9
(22) Anmeldetag: 11.06.1999
(51) Int. Cl.: G05B 17/02

(54) **Informationstechnisches System zur Definition, Optimierung und Steuerung von Prozessen**
Computer system for the definition, optimisation and control of processes
Système d'ordinateur pour la définition, l'optimisation et la régulation des processus

(43) Veröffentlichungstag der Anmeldung: 20.12.2000
(73) Patentinhaber: IvyTeam AG, 6304 Zug (CH)
(72) Erfinder: Lienhard, Heinz Dr. h.c., 6300 Zug (CH); Bütler, Bruno, 5643 Sins (CH); Poli, Marco, 6343 Rotkreuz (CH); Weiss, Reto, 6403 Küssnacht (CH); Künzi, Urs-Martin, 8049 Zürich (CH); Pentus, Mati, 117192 Moscow (RU)
(74) Vertreter: Barth, Carl Otto

(56) Entgegenhaltungen:
- DE-A- 19 639 424
- US-A- 4 965 742
- US-A- 4 967 386
- US-A- 5 495 417
- US-A- 5 659 467
- US-A- 5 710 700
- US-A- 5 838 595
- BALL S: "XML SUPPORT FOR TCL" PROCEEDINGS OF THE SIXTH ANNUAL TCL/TK CONFERENCE, 18. September 1998 (1998-09-18), Seiten 109-119-119, XP000856637 USA
- P.MARTIN : "THE DEVELOPMENT OF AN OBJECT-ORIENTED,DISCRETE-EVENT SIMULATION LANGUAGE USING JAVA" PROCEEDINGS,ASIA PACIFIC SOFTWARE ENGINEERING CONFERENCE AND INTERNATIONAL COMPUTER SCIENCE CONFERENCE, 2. Dezember 1997 (1997-12-02), Seiten 123-130, XP000856666 HONG KONG
- D.NICOL ET AL: "THE IDES FRAMEWORK: A CASE STUDY IN DEVELOPMENT OF A PARALLEL DISCRETE-EVENT SIMULATION SYSTEM" PROCEEDINGS OF THE 1997 WINTER SIMULATION CONFERENCE,7. Dezember 1997 (1997-12-07), Seiten 93-99, XP000857125 USA

## Beschreibung

### Technisches Gebiet der Erfindung

Die Erfindung liegt auf dem Gebiet der Computeranwendung zur Simulation und/oder Steuerung von realen Prozessen, insbesondere von solchen Prozessen, die als Abläufe diskreter Ereignisse stattfinden. Im Englischem wurde dafür der Begriff "discrete event dynamic systems", kurz DEDS, geprägt. Derartige Prozesse treten beispielsweise bei technischen Entwicklungen wie auch bei anderen Geschäftsvorgängen im industriellen oder tertiären Bereich auf. Auch das Verhalten verteilter Anwendungen auf dem Intra-/Internet-Sektor, insbesondere von Systemen und zugehöriger Software für den sog. "electronic commerce", basiert auf solchen diskreten Prozessen und lässt sich mit der Erfindung in neuartiger Weise definieren und optimieren. Die dabei entstehenden Prozessmodelle können in neuartiger Weise unmittelbar für das Monitoring und die System-Steuerung verwendet werden.

### Stand der Technik

Ähnliche Ansätze für Computeranwendungen auf Prozesse sind aus dem Bereich der Steuerung industrieller Fertigungsprozesse bekannt, beispielsweise in der chemischen Industrie. Solche Prozesse sind meist durch Systeme von Gleichungen, insbesondere Differentialgleichungen, beschreibbar, welche dann in einem Modell abgebildet werden und so zur Steuerung herangezogen werden können. Auch Gebäudeleitsysteme sind heute vielfach computerisiert und werden mittels Modellierung und Simulation entworfen.

Beispielsweise befasst sich ein mehrteiliger Artikel von K. Pearson "Characterizing Complicated Systems" im SGA-Bulletin No. 24 vom Dezember 1998, Januar und Februar 1999, herausgegeben von der Schweiz. Gesellschaft für Automatik/SGA mit Prozessen, und zwar mit "model-based control ..., particularly in the area of industrial process control ...". Darin wird ein Destillations-Prozess erwähnt, der durch ca. 350 Differentialgleichungen beschrieben werden kann. Einen Ansatz, der für derartige, mathematisch beschreibbare kontinuierliche Prozesse geeignet ist, auf andere, insbesondere diskontinuierliche, mathematisch nicht ohne weiteres beschreibbare Prozesse anzuwenden, ist offensichtlich nicht ohne weiteres möglich.

Auch das US Patent 4 965 742 von Skeirik beschreibt eine Prozess-Steuerung, bei der die modulare Software vom Benutzer, die die Prozessüberwachung implementiert, ohne Unterbrechung der Überwachung revidiert und geändert werden kann. Dies ermöglicht eine flexible und vor allem schnelle Anpassung der Prozess-Steuerung an geänderte Umgebungsbedingungen. Diese Prozess-Steuerung ist allerdings für die Überwachung und Steuerung eines im wesentlichen kontinuierlichen Prozesses gedacht, der also beispielsweise mathematisch durch ein System von Gleichungen, ggf. Differentialgleichungen, beschrieben werden kann. Für sog. diskrete Prozesse, d.h. Prozesse aus einer Abfolge diskreter Ereignisse, wie Geschäfts- oder Planungs- und Entwicklungs-Prozesse, ist ein solches System allerdings ungeeignet. Derartige Prozesse lassen sich nicht in der bekannten Art steuern und überwachen; es können kaum Sensoren und Aktuatoren wie Temperaturfühler oder Stellventile sinnvoll eingesetzt werden.

Weiterhin ist im US-Patent 5 710 700 von Kurtzberg et al. eine Verfahren für ein Manufacturing Process Monitoring in Realzeit, also die Überwachung eines Herstellungsprozesses, beschrieben. Oft werden diese Steuerungen als CIM-Verfahren, d.h. Computer Integrated Manufacturing bezeichnet. Das im genannten US-Patent detailliert ausgeführte Verfahren befasst sich in erster Linie mit der Auswahl und Verarbeitung der beim betrachteten Herstellungsprozess auftretenden Variablen und anderer Messwerte. Wesentliches Merkmal eines solchen Systems ist, gleich wie im o.g. US-Patent 4 965 742, dass es für kontinuierliche Prozesse gedacht und geeignet ist, wobei diese Prozesse durch eine üblicherweise grosse Anzahl von z.T. variablen Messwerten definiert sind. Deren Speicherung, Klassifizierung und Auswertung, auch ihre Beschränkung, bilden den Hauptansatzpunkt für Verbesserungen, wie sie in den beiden US-Patenten ausgeführt sind. Die grafische Darstellung der durchgeführten Prozesses ist, soweit überhaupt vernünftig möglich und vorgesehen, nur ein Nebenaspekt. In keinem der beiden US-Patente ist darauf im Detail eingegangen, während gerade diese grafische Darstellung und Bearbeitung einen Hauptaspekt der vorliegenden Erfindung darstellt.

Auch das US-Patent 5 838 595 von Sullivan et al. zeigt nur wenig.in dieser Richtung. Das dort dargestellte CIM-Verfahren zur Modellierung und Steuerung eines Fabrikationsprozesses betrifft insbesondere die Änderung oder Anpassung der Steuerungsfunktion für spezifische Prozessschritte oder -teile, wobei die Prozesssteuerung auf einem statistischen und/oder diagnostischen Prozessmodell basiert. Auch hier spielt die für die vorliegende Erfindung so wichtige grafische Darstellung eine untergeordnete Rolle; auch sind Prozesse, die auf diskreten Ereignissen beruhen, nicht angesprochen.

Die vorliegende Erfindung löst die Aufgabe, solche diskreten Prozesse, die üblicherweise nicht wie kontinuierliche Prozesse durch Differentialgleichungen beschrieben werden können, sondern aus Abläufen diskreter Elemente oder Schritte bestehen, zu entwerfen, zu optimieren und zu automatisieren. Derartige Prozesse können recht kompliziert sein. Erwähnt seien hier die (technischen) Systemabläufe in der Informationstechnologie, z.B. beim sog. e-Commerce. Aber auch Prozesse (oder Abläufe) mit nur mittelbarem Bezug zur Technik in Unternehmen und anderen Organisationen fallen in diese Kategorie.

### Die Erfindung

Kurz gesagt ist es Aufgabe der Erfindung, ein informationstechnisches Verfahren und System zu schaffen, das in der Lage ist, diskrete Prozesse, d.h. Abläufe diskreter Ereignisse, zu steuern, zu simulieren, zu optimieren und/oder zu überwachen.

Im wesentlichen kann die Erfindung beschrieben werden als ein informationstechnisches System zur Steuerung von Prozessen, insbesondere von Prozessen, die aus Abläufen diskreter Ereignisse bestehen, wobei ein Prozessmodell einem realen Prozess entspricht oder ihn abbildet. Dabei können Prozessmodell und realer Prozess über mindestens eine Schnittstelle, vorzugsweise eine standardisierte Schnittstelle, informationstechnisch gekoppelt sein. Über diese Schnittstelle kann nun ein direkter Datenaustausch zwischen Prozessmodell und realem Prozess erfolgen. Vorzugsweise eignet sich dazu ein gängiges Standardformat wie XML, ein weit verbreitetes Internetformat. Durch die direkte informationstechnische Kopplung wird jedwede aufwendige und daher meist ineffiziente Datenkonvertierung vermieden.

Etwas präziser ausgedrückt ist die Erfindung ein informationstechnisches Verfahren zum Entwickeln und Optimieren eines computergesteuerten realen Workflow-Prozesses aus diskreten Ereignissen, wobei ein Abbild des realen Prozesses durch ein Prozessmodell auf einem Computerdisplay darstellbar ist. Die besonderen Kennzeichen der Erfindung sind einmal, dass eine informationstechnische Schnittstelle vorgesehen ist, mittels welcher das Prozessmodell, also das auf dem Display dargestellte Abbild, und der reale Prozess derart miteinander verbindbar sind, dass ein alternativer Betrieb des Prozessmodells ermöglicht wird.

Die erste der Alternativen ist eine sozusagen unabhängige Funktion des Modells, wobei dieses getrennt und unabhängig vom realen Prozess zur Entwicklung, Gestaltung und/oder Optimierung des Prozessmodells dient. Dabei ist das Modell "lauffähig", kann also den Prozess simulieren, womit z.B. Fehler beseitigt und Abläufe (theoretisch) optimiert werden können.

Die zweite der Alternativen ist eine sozusagen abhängige Funktion des Modells, nämlich verbunden und gekoppelt mit dem realen Prozess. Jetzt kann einerseits die Implementierung diskreter Ereignisse, also von Prozessschritten oder eines kompletten Prozesses aus dem Prozessmodell in den realen Prozess vorgenommen werden. Andererseits ist die Überwachung oder Kontrolle des ablaufenden realen Prozesses möglich, eine Funktion die, wie oben erwähnt, bei Herstellungsprozessen oder anderen kritisch zu kontrollierenden Abläufen wichtig ist.

Die erste alternative Betriebsweise, nämlich der unabhängige Betrieb, macht das System zur Simulation von Prozessmodifikationen und/oder zur Optimierung des Prozesses geeignet und ist besonders vorteilhaft, wenn der reale Prozess nicht unterbrochen werden soll oder darf. In einem solchen Fall kann die Prozessmodifikation im Prozessmodell (ohne Unterbrechung des realen Prozesses) geprüft und, wenn die Modifikation für gut befunden wurde, kann sie über die Schnittstelle in den realen Prozess ganz oder teilweise integriert werden.

Weitere Ausgestaltungen der Erfindung ergeben sich aus den Patentansprüchen.

Wie gesagt, erlaubt das erfindungsgemässe System aber auch die Ankopplung des Prozessmodells an den laufenden realen Prozess, indem das Prozessmodell, gesteuert über die Schnittstelle sozusagen parallel zum realen Prozess mitläuft, d.h. relevante Systemzustands-Information erhält. Damit ist einerseits eine permanente Überwachung und Kontrolle des ablaufenden realen Prozesses möglich. Wenn die Schnittstelle zwischen Prozessmodell und realem Prozess bidirektional ausgebildet ist, wird damit sogar eine unmittelbare Beeinflussung des realen Prozesses ermöglicht Auf diese Weise können beispielsweise Prozessmodifikationen, die erfolgreich im Prozessmodell simuliert wurden, unmittelbar in den realen Prozess übertragen, d.h. angewandt werden. Aufgrund des momentanen Systemzustandes und beobachteter Eingangsstatistik kann in vielen Fällen auch ermittelt werden, was zukünftig geschieht und welche Massnahmen ergriffen werden müssen, um erwünschte Resultate zu erreichen.

Die Erfindung kann beispielsweise mit "Workflow Management Systemen" angewandt werden, für die bisher keine derartigen, eng gekoppelten Lösungen existieren. Solche Workflow Management Systeme wurden beispielsweise beschrieben von S. Joosten, G. Aussems, M. Duitshof, R. Huffmeijer und E. Mulder, in "WA-12: An Empirical Study about the Practice of Workflow Management", Research Monograph, University of Twente, ISBN 90-365-0683-2, 1994.

Wie oben bereits erwähnt, kann das neue Tool aber auch ohne unmittelbare Ankopplung an einen realen Prozess verwendet werden. Wegen seiner einfachen und sinnreichen Handhabung bietet es dabei Vorteile gegenüber bekannten Lösungen. Insbesondere ist es durch seine Struktur und seine Eigenschaften - wie weiter unten noch gezeigt werden wird - geeignet, als ein sog. Applet ggf. zusammen mit dem Prozessmodell über das Internet oder über ein (hausinternes) Intranet übertragen zu werden. Die damit erzielte praktisch sofortige Verbreitung, Anpassung oder Modifikation bietet zusammen mit dem möglichen Simultanzugriff völlig neue Möglichkeiten, wobei insbesondere die simultane und sofortige Verbreitung resp. Publikation der erzeugten dynamischen Modelle über das Internet oder Intranet, völlig neuartige Anwendungen der Informationstechnologie innerhalb von Unternehmen und Verwaltungen ermöglicht. Einzelheiten ergeben sich aus dem weiter unten beschriebenen Ausführungsbeispiel der Erfindung.

Die angesprochenen Prozessmodelle werden gemäss der Erfindung aus bereits existierenden Komponenten und/oder sog. Standardelementen in einfacher Weise graphisch durch Verbinden mit Pfeilen erstellt. Solche Komponenten können beispielsweise auch von einem elektronischen Katalog vom Internet oder einem Intranet heruntergeladen werden. Die Komponenten sind gemäss der Erfindung immer mit einer Umgebung ausgestattet, so dass sie vor dem Einsatz animiert und somit auf ihre Eignung überprüft werden können.

Die genannten Standardelemente, d.h. die Grund-Baublöcke für den Anwender, mittels derer er/sie selbst neue Komponenten erstellen kann, werden aus nur wenigen (derzeit 3) fundamentalen Basiselementen, sog. Quarks, erstellt. Dadurch wird die Erstellung von kunden- oder anwendungsspezifischen Sätzen oder Paletten von Standardelementen signifikant vereinfacht, ohne das System selbst anpassen zu müssen.

Zwar werden z.Z. einfache, eher akademische Beispiele dynamischer Systeme der genannten Art (DEDS) wissenschaftlich behandelt, aber beispielsweise ganze Unternehmen oder auch Teile davon können mit diesem theoretischen Ansatz wegen ihrer Komplexität nicht angegangen werden. Dazu kommt, dass z.B. bei der Untersuchung von Untemehmensprozessen vor allem Wirtschaftswissenschafter tätig sind, die wenig vertraut sind mit Lösungen, die die (technische) Automatik zu bieten hätte. So sind auch die heute existierenden Werkzeuge in erster Linie Dokumentationshitfen, mit denen man umfangreiche Prozessdokumentationen erstellen kann, die aber kaum für die Gestaltung, Optimierung und Steuerung der erwähnten informationstechnischen Systeme in enger Kopplung verwendbar sind. Um solche DEDS-Systeme analysieren und optimieren zu können, braucht man simulierbare, theoretisch fundierte Modelle davon.

Im nachfolgend beschriebenen Ausführungsbeispiel wird die Integration eines neuen Tools gemäss der Erfindung in ein Workflow- oder ERP (Enterprise Resource Planning)-System dargestellt. Mittels eines derartigen Tools kann nicht nur ein DEDS-Prozess optimiert werden, sondern es ist auch ein Werkzeug zum Workflow-Design und Workflow-View, mit dem man laufend den System-Zustand verfolgen und/oder das System anpassen kann.

### Ausführungsbeispiel der Erfindung

In den Figuren zum beschriebenen Ausführungsbeispiel zeigen
- Fig. 1: eine Übersicht über ein System gemäss der Erfindung
- Fig. 2: verschiedene Abstraktionsebenen des Tools gemäss der Erfindung
- Fig. 3: ein mittels "Quarks" definiertes Standardelement "Schritt"
- Fig. 4: Prozessdarstellung auf einem Display

Nachfolgend wird nun ein Beispiel für eine Prozessmodellierung und Simulation mittels des efindungsgemässen Tools beschrieben. Der Formalismus, auf dem das neue Tool basiert, geht letztlich auf Petri-Netze zurück, aber das sei hier nur der Vollständigkeit halber erwähnt; für das Verständnis der Funktion ist es nicht erforderlich. Solche Petri-Netze wurden z.B. von W. Reisig in "Petrinetze", Springer Verlag Berlin, Heidelberg, 1982, beschrieben.

Der Übersichtlichkeit halber sei hier eine Bezugszeichenliste eingefügt:

### Bezugszeichenliste

**Fig.1**
   - 1: Simulator
   - 2: Schnittstelle
   - 3: realer Prozess
   - **4**: Intra/Internet
   - 5: Webserver
**Fig. 2**
   - 21: Quark-Maschine
   - 22: Quark-Ebene
   - 23: Standardelemente-Ebene
   - 24: Komponenten-Ebene
**Fig. 3**
   - 31: Eingangsobjekt(e)
   - 32: Standardelement
   - 33: Ausgangsobjekt(e)
   - 34a, 34b: Speicher-Quark(s)
   - 35a, 35b: Nebenpfad(e)
   - 36a: Synchronisations-Quark(s)
   - 37a, 37b: Mapping-Quark(s)
   - 38: ein Ressourcenspeicher
**Fig. 4**
   - 41a bis 41g: Pfeile (Objektfluss)
   - 42a bis 42c: zu bearbeitendeObjekte
   - 43: ein Ressourcenspeicher mit "Fullstandsanzeige"
   - 44: Sonde

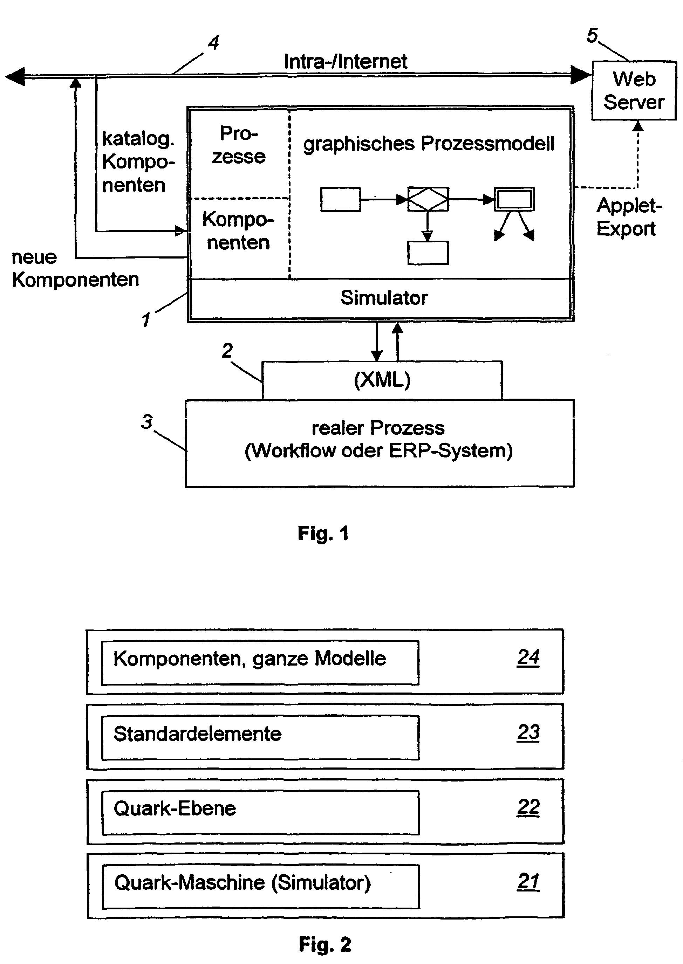

Fig. 1 zeigt eine schematische Übersicht über ein System gemäss der Erfindung. Im Simulator 1, üblicherweise ein Computer oder Computemetzwerk geeigneter Grösse und Geschwindigkeit, läuft das Prozessmodell ab. Der Simulator 1 kann über eine oder mehrere Schnittstellen 2 an den realen Prozess 3 gekoppelt werden. Letzterer kann beispielsweise der Ablauf einer technischen Entwicklung im Entwicklungslabor eines Industrieunternehmens oder der (technische) Ablauf in einer Kraftfahrzeugzulassungsstelle oder der Zahlungsverkehr-Ablauf einer Bank sein.

Die gezeigten Schnittstellen 2 übertragen zumindest in einer Richtung Daten, die ausreichen, um im Simulator 1 ein synchron laufendes Abbild des realen Prozesses zu erstellen. Vorzugsweise sind die Schnittstellen 2 jedoch bidirektional ausgebildet, so dass sowohl eine Datenübertragung vom realen Prozess 3 zum Simulator 1, als auch vom Simulator 1 zum realen Prozess 3 möglich ist. Beides erfolgt vorzugsweise über einen einfachen Datenaustausch, z.B. mittels XML-Dokumenten, wie oben bereits erwähnt, d.h. die Prozessmodell-Daten werden beispielsweise direkt als XML-Dokument vom Simulator 1 an den realen Prozess 3 weitergegeben; umgekehrt kann der reale Prozess 3 XML-Daten an den Simulator 1 zurückliefern. In der ersten Richtung wird damit das Verhalten des realen Prozesses beeinflusst, während in der Rückführung eine Abbildung des Zustandes vom realen Prozess 3 an den Simulator 1 erfolgt.

Dank der Anpassungsfähigkeit des neuen Tools an das den realen Prozess implementierende System und dem einfachen Export der Prozessmodell-Daten, z.B. als XML-Dokument, wird eine einfache und effiziente Kopplung zwischen dem simulierten Prozessmodell und dem realen Prozess erreicht - ohne komplexe Schnittstelle, die die Konvertierung der Daten in den beiden Richtungen vornimmt. Insbesondere bei Benutzung des Internet-Standards XML können die beiden Teilsysteme auch direkt über das Internet gekoppelt werden.

Die Schnittstellen können auch beeinflussbar ausgebildet sein, so dass je nach gewünschter Funktion entweder eine Überwachung des realen Prozesses oder eine vom realen Prozess abgekoppelte Simulation oder eine Beeinflussung des realen Prozesses vom Prozessmodell aus möglich sind bis hin zur vollständigen Steuerung des realen Prozesses durch das Prozessmodell. Auch sind Kombinationen dieser drei grundsätzlichen Betriebsarten möglich. Insgesamt stellt das erfindungsgemässe System ein völlig neues Software-Tool für die Simulierung und/oder Optimierung und/oder Steuerung und Beeinflussung von realen Prozessen diskreter Ereignisse dar.

Die Visualisierung sowohl eines zu simulierenden wie eines realen Prozesses erfolgt durch die graphische Darstellung des Prozessmodells, das mit Hilfe des Simulators 1 animiert und so leicht verständlich gemacht werden kann. Das Prozessmodell im Simulator 1 lässt sich beispielsweise auch als Java-Applet exportieren und kann so über einen Webserver 5 auf dem Intra-/Internet 4 in dynamischer Form publiziert werden, womit das Modell an praktisch beliebigen Orten in einen Internet-Browser heruntergeladen und in diesem animiert resp. simuliert werden kann. Wird nun beispielsweise im Modell-Applet auf dem Webserver 5 laufend der Zustand des realen Prozesses nachgeführt, so ist auch diese Information über das Intra-/Internet 4 an beliebiger Stelle einer beliebigen Anzahl von Leuten zugänglich gemacht

Wie oben bereits angedeutet, sind vorzugsweise die im Simulator 1 simulierten Prozessmodelle ganz oder teilweise aus Komponenten aufgebaut, die z.B. von einem elektronischen Katalog über das Intra-/Internet 4 bezogen werden können; neu erstellte Komponenten können dann wiederum über dieses Intra-/Internet 4 in den erwähnten Katalog abgespeichert werden.

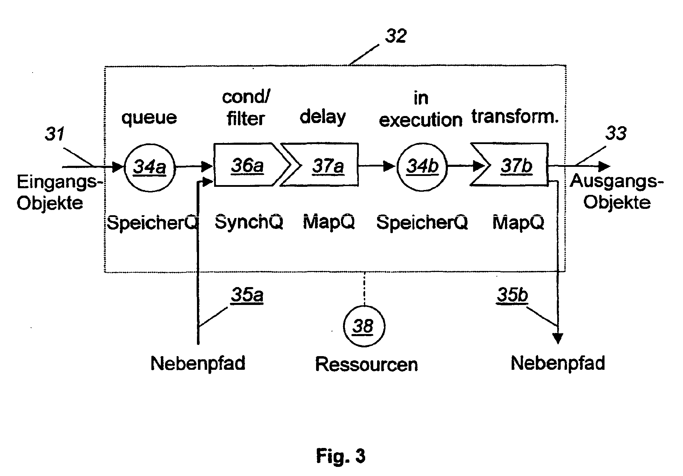

Fig. 2 zeigt die Abstraktionsebenen des neuen Tools. Ganz unten liegt die "Quark-Maschine" 21 (der Begriff "Quark" wurde aus der Physik übernommen und wird hier im Sinne von "kleinster Grundbaustein" verwendet), d.h. die Maschine mit der die elementaren Bausteine, die Quarks, simuliert werden. Diese Quarks sind dem Benutzer üblicherweise nicht zugänglich, sie dienen ausschliesslich der Definition von Standardelementen, mit denen der Benutzer seine Modelle, resp. Modellkomponenten, aufbauen kann. Die vom Tool durchgeführte Simulation basiert auf diesen Quarks, es wird sozusagen auf der Quark-Ebene 22 simuliert. Daher muss der Simulator nicht geändert werden, wenn eine neue Palette von Standardelementen (aus diesen Quarks) definiert wird. Im gezeigten Ausführungsbeispiel werden nur drei Quarks benötigt, um die erforderlichen Standardelemente effizient definieren zu können.

Die drei hier benutzten Quarks sind weiter unten im Zusammenhang mit Fig. 3, das ein aus solchen Quarks zusammengestelltes Standardelement "Schritt" zeigt, genauer beschrieben: das Speicher-Quark (SpeicherQ), das Synchronisations-Quark (SynchQ) und das Mapping-Quark (MapQ).

Auf dem Workflow-Gebiet wird man nun diejenigen Standardelemente definieren, die für die angestrebte Simulation oder Modellierung eines bestimmten Workflow-Systems nötig sind. Dies ist die nächsthöhere Ebene 23 in Fig. 2. Mehrere Standardelemente werden nun zu einer sog. Element-Palette im Tool zusammengefasst, mit der Modell-Komponenten - Ebene 24 - erstellt werden können, wobei neue Komponenten neben Standardelementen auch bereits existierende Komponenten enthalten können. In diese neuartigen graphischen Modellkomponenten, hier auch "IvyBeans" genannt, lassen sich beispielsweise auch sog. JavaBeans einbinden. Letztere sind in Java (einer von SUN Microsystems entwickelten Programmiersprache, siehe z.B. "The Java Programming Language" von Arnold Gosling, Addison Wesley, 1996, oder "How to program JavaBeans" von P. Coffee, M. Morrison, R. Weems, J. Leong, ZD Press, 1997) geschriebene Software-Komponenten.

Ein grosser Vorteil der IvyBeans ist, dass sie im Tool sofort zu komplexen Prozessmodellen zusammen verbunden werden können; der entscheidende Vorteil der JavaBeans ist ihre wachsende Zahl und gute Verfügbarkeit über das Internet.

Im Normalfall wird ein Prozessmodell nun aus Standardelementen, IvyBeans und möglicherweise JavaBeans zusammengesetzt sein, wie in der obersten Abstraktionsebene in Fig. 2 angedeutet wird.

Nachfolgend sei mit Bezug auf Fig. 3 Struktur und Funktion eines Standardelements näher erläutert. Fig. 3 zeigt das Standardelement "Schritt" (Step) 32, d.h. eine einzelne Aktivität innerhalb eines typischen Workflow-Prozesses. Diese Aktivität erzeugt aus mindestens einem Eingangsobjekt 31, z.B. einer Bestellung, üblicherweise unter Verwendung eines oder mehrere Ressourcenobjekte, z.B. aus einem Ressourcenspeicher 38, transformierte Ausgangsobjekte 33, z.B. ein Maschinenteil oder ein Dokument. Eingehende Eingangsobjekte 31 werden einer Eingangswarteschlange (Queue) 34a zugeführt. Über einen ersten Nebenpfad 35a können andere Objekte, z.B. Daten-Objekte, aus einem Speicher (nicht dargestellt) zur Verarbeitung geholt oder über einen zweiten Nebenpfad 35b in einen solchen Speicher abgelegt werden.

Für die Definition des in diesem Standardelement 32 durchzuführenden Prozess-Schritts werden - wie oben bereits erwähnt - nur drei Quarks benötigt, das Speicher-Quark, das Synchronisations-Quark (SynchQ) und das Mapping-Quark (MapQ). Nachfolgend sind deren Funktionen genauer beschrieben.
- SpeicherQ 34a: Dieses erste Quark modelliert die Eingangswarteschlange 34, d.h. bildet sie ab. Die Kapazität bestimmt die mögliche Länge der Warteschlange, der Delay die sog. Liegezeit.
- SynchQ 36a: Durch dieses Synchronisations-Quark werden die an den Eingängen des Standardelements bereitstehenden Objekte 31 und 35a synchronisiert, d.h. diese Objekte müssen gleichzeitig bereitstehen, damit dieser Schritt durchgeführt werden kann. Ausserdem kann durch Filtern eine Auswahl der in der Warteschlange zur Verarbeitung bereitstehenden Objekte 31 getroffen werden, indem beispielsweise aus der Warteschlange zuerst das Objekt 31 mit dem grössten Wert eines vorgegebenen Attributs herausgefiltert und verarbeitet wird. Ressourcen werden nun z.B. in einem Ressourcenspeicher 38, reserviert, d.h. die entsprechende Ressource wird blockiert und kann nicht gleichzeitig von einer anderen Aktivität verwendet werden. Über den bereits genannten Nebenpfad 35a können zudem Daten-Objekte aus einem (nicht gezeigten) Daten-Speicher zur Verarbeitung in das Standardelement geholt werden.
- MapQ 37a: Dieses erste Mapping-Quark bestimmt die für Verarbeitung vorgesehene Zeitdauer, also die durch die Verarbeitung eintretende Verzögerung (delay).
- SpeicherQ 34b: Dieses zweite Speicher-Quark bestimmt die Anzahl der Objekte, die gleichzeitig in Bearbeitung sein können (in execution). Die Kapazität und die Liegezeit (delay) dieses SpeicherQ bestimmen Grad der gleichzeitigen Bearbeitung (z.B. Anzahl paralleler Arbeitsplätze) und die Zeit zum Ausführen des Schritts.
- MapQ 37b: Dieses zweite Mapping-Quark transformiert die Attributwerte des Eingangsobjekts, d.h. "produziert" das gewünschte Ausgangsobjekt. Es gibt auch eingesetzte Ressourcen wieder frei, z.B. aus dem Ressourcenspeicher 38. Dieses Quark hat zusätzlich noch Ausgangsbedingungen, die zwar für das Element "Schritt" nicht verwendet werden, aber bei der Definition anderer Standardelemente nötig sein können.

Zusammenfassend lässt sich sagen, dass mittels des in Fig. 3 gezeigten Standardelements 32 ein relativ komplexes Element durch sinnreiche Verwendung weniger elementarer Bausteine, der sog. Quarks, in Software implementiert werden kann. Der Vorteil dieses universell anwendbaren Lösungsansatzes für die Implementierung wie für die Simulation liegt auf der Hand, da mit nur wenigen - drei im Ausführungsbeispiel - Quarks alle vorkommenden Aufgaben gelöst werden können; d.h. man kann die Modelliermöglichkeiten ändern ohne den Simulator ändern zu müssen.

Auf der nächsten Abstraktionsebene 24, vgl. Fig. 2, werden aus solchen Standardelementen Komponenten zusammengestellt, ggf. zusammen mit anderen vorgegebenen Komponenten, sog. "IvyBeans". Auch sog. Java Beans, die für die vorliegende Anwendung geeignet sind, können in das Modell eingebunden werden.

Die computergesteuerte Zusammenstellung einer Komponente erfolgt mit Hilfe des graphischen Tool-Editors durch einfaches Verbinden und durch Ausfüllen vorgegebener Masken, z.B. für numerische Werteingaben.

Komponenten können top-down erzeugt werden, d.h. durch fortschreitendes Zusammenfassen eines flachen Simulations-Modells oder bottom-up, d.h. man kreiert erst gewisse Komponenten (oder holt sie aus dem Komponentenkatalog) und baut damit ein Modell oder einen Teil eines Modells auf.

Nach dem Zusammenstellen einer Komponente kann diese (durch Wahl eines entsprechenden Menü-Punktes) einem Katalog zugefügt werden, wodurch sie wiederverwendbar wird. Auch können, im Sinne des objekt-orientierten Programmierens, davon parametrisierbare Instanzen erhalten werden. Die im Katalog vorhandenen Komponenten erscheinen für den Benutzer bildschirmmässig auf einer Element-Palette und können ebenso einfach wie Standardkomponenten in das Modell eingesetzt und durch Pfeile verbunden werden.

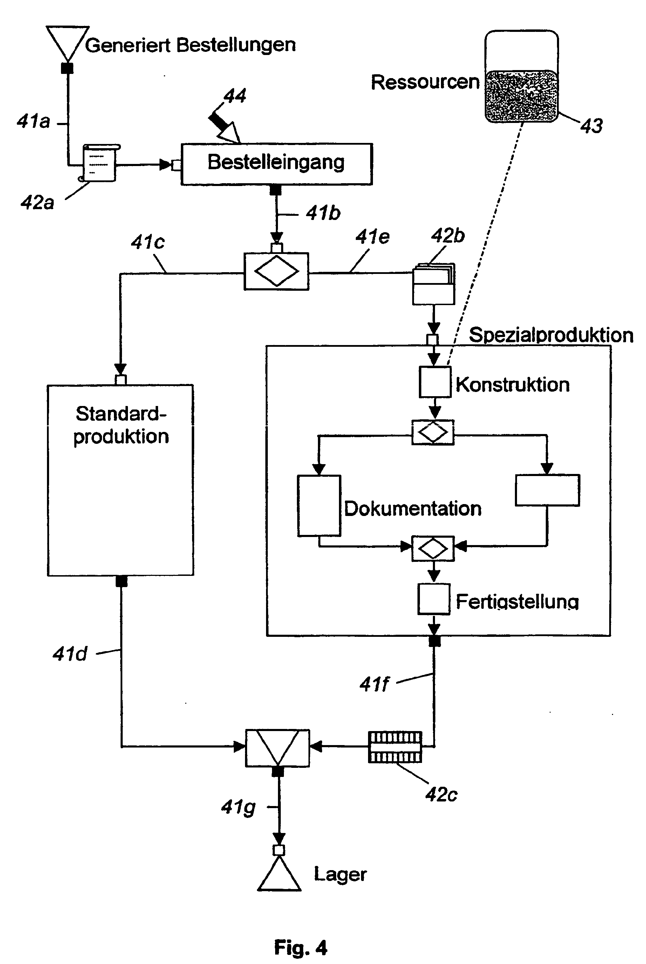

Mittels der Komponenten wird die Darstellung eines Prozesses - und damit der Prozess gewissermassen selbst - hierarchisch gegliedert; die oberste Sicht zeigt meist nur die Komponenten. Eine solche Sicht ist in Fig. 4 gezeigt, die nachfolgend kurz beschrieben werden soll.

Bei der in Fig. 4 dargestellten Ansicht eines graphischen Prozessmodells läuft der Objektfluss über die Pfeile 41a bis 41g. Jedes der Objekte 42a bis 42c gehört einer Objektklasse an und repräsentiert eine Realität, die im realen Prozess be-oder verarbeitet, bzw. gebraucht wird. Beispielsweise sind dies auf einem typischen Kontrollpfad häufig Ereignisse, Meldungen, Anweisungen; erzeugt werden daraus, meist zusammen mit Ressourcen, neue Ereignisse, Dokumente, Teilprodukte, etc. Den Eingang bildet ein Bestellgenerator, am Ende befindet sich ein simuliertes Lager.

Eine der Ressourcen vom Ressourcenspeicher 43, z.B. ein Mitarbeiter oder eine Einrichtung, kann per Name für einen Schritt (z.B. Bestelleingang) reserviert und bei Abschluss wieder freigegeben werden. Darauf wird weiter unten noch eingegangen werden.

Jedes Objekt hat ein oder mehrere Attribute, deren Anzahl und Typ in einer Objektklasse festgelegt werden. Die Werte dieser Attribute können im Prozess verändert werden: so kann z.B. in einem Schritt das Attribut Bearbeitungszeit um die Ausführungszeit erhöht werden, oder es werden laufend die Kosten zu einem Kostenattribut addiert, beispielsweise zur Prozesskosten-Erfassung.

Typische Attribute von Ressourcen-Objekten sind Kostensatz, Qualifikation, akkumulierte Zeit (z.B. bei einem Mitarbeiter) - oder bei einer Werkzeugressource Maximalbelastung, Standzeit, Einsatzdauer, etc. Eine nahezu beliebige Transformation der Attributwerte wird dadurch ermöglicht, dass, ähnlich wie in Tabellenprogrammen, Ausdrücke auf einer assoziierten Maske eingegeben werden können.

Mit einem Pfeil lassen sich auch Ressourcenspeicher direkt verbinden, womit eine hierarchische Organisation von Ressourcen angegeben werden kann: Wird eine Ressource aus einem Speicher auf höherer Ebene gewünscht, wird der ganze darunterliegende Baum von Speichern auf die gewünschte Ressource abgesucht.

Die Komponente "Spezialproduktion" des in Fig. 4 gezeigten Beispiels ist im sog. Transparenzmodus dargestellt, d.h. man sieht sozusagen in die Komponente hinein und erkennt die drei Standardelemente "Konstruktion", "Dokumentation" und "Fertigstellung". In den Schrittmasken, die per Kontextmenü einfach zu öffnen sind, kann man z.B. Liegezeit, Ausführzeit und/oder Werttransformation angeben. Dabei braucht der Benutzer die Definition der Standardelemente mittels Quarks, wie oben beschrieben, nicht zu kennen.

Wie bereits erwähnt, ist in Figur 4 auch ein weiterer Ressourcenspeicher 43 für Mitarbeiter als Beispiel modelliert. Wie dessen punktierte Verbindungslinie zum Standardelement "Konstruktion" andeuten soll, wird der Ressourcenspeicher 43 sozusagen von diesem Standardelement gesteuert. Eine gegebene Konstruktionsaufgabe, die ja Arbeitszeit, d.h. den Einsatz eines Konstrukteurs benötigt, verringert den "Füllstand" des Ressourcenspeichers 43. Diese laufende Anzeige der Auslastung bestimmter, vom Benutzer definierbarer Ressourcen ermöglicht eine schnelle und zielsichere Planung, da man auf einen Blick sieht, ob bestimmte Ressourcen vom Prozess schwach oder stark in Anspruch genommen werden, oder womöglich gar nicht mehr zur Verfügung stehen.

Als weiteres, unmittelbar einsichtiges Hilfsmittel können zeitliche Änderungen der Warteschlange beim Bestelleingang in Balken- oder anderen Diagrammen graphisch dargestellt werden (in Fig. 4 nicht gezeigt). Zur Anzeige solcher Simulationsergebnisse genügt es, in das zu registrierende Element per Maus eine Sonde 44 einzuführen. Auch Attributwerte von Objekten in einem Element lassen sich so anzeigen. Eine solche Sonde kann einfach mittels eines sog. I/O-Wizard spezifiziert werden.

Das beschriebene Simulations-Modell erlaubt die gleichzeitige Optimierung von Prozessablauf und Ressourcen-Allokation. Ein Grossteil heutiger informationstechnischer Systeme stellen eigentlich DEDS dar und lassen sich hervorragend mit einem Tool wie IvyFrame modellieren und spezifizieren. Man erhält eine ausführbare Spezifikation, die in klarer und präziser Form zeigt, wie sich das ganze System verhalten soll und dessen Dynamik sich leicht kommunizieren lässt.

Das vorliegende Ausführungsbeispiel der Erfindung ist vollständig in Java implementiert und erlaubt daher einen einfachen und eleganten Export der ProzessModelle als Java-Applets, die sich direkt mittels eines Internet-Browser animieren lassen. Damit können z.B. innerhalb einer Firma auch komplexe Prozesse via Intranet zugänglich gemacht werden, quasi eine Art dynamischer Intra-/Internet-Publikation. Insbesondere bei Grossanwendem oder Anwendern mit weit verteilter Organisation, also beispielsweise bei einer grossen Verwaltung mit vielen Aussenstellen, können so auch komplexe, auszuführende Prozesse einfach, schnell und zuverlässig zugänglich gemacht werden.

Dazu können den Prozess-Elementen noch beliebige Dokumente zugewiesen werden, d.h. praktisch unbegrenzte Hilfsfunktionen zur Verfügung gestellt werden; so kann der Benutzer jederzeit per Mausklick relevante Angaben zum betreffenden Prozess-Schritt abrufen. Der (simulierte) Prozess steht sozusagen im Zentrum für jede weitere Informationsbeschaffung.

Wie oben bereits erläutert, erfolgt die Realisierung und Automatisierung des Prozesses durch ein entsprechendes informationstechnisches System mit einer XML-Schnittstelle (beispielsweise beschrieben von Simon St. Laurent in "XML - A Primer", MIS Press, 1998) zwischen dem Simulator oder Prozessmodell und dem realen Prozess. Damit kann, wie erläutert, das erfindungsgemässe System als Steuer- und Monitor-Paket integriert werden. Die damit erzielte, quasi modellbasierte "Feed Forward Control" bietet einzigartige Vorteile: ein solcher Ansatz z.B. in Workflow- oder Enterprise Resource Planning Systemen (ERP-Systeme) schafft leicht konfigurierbare, adaptive Lösungen, deren Dynamik nur durch das Prozessmodell definiert wird. Damit ist das efindungsgemässe System für den oder die Benutzer ein sehr übersichtliches, leicht bedienbares, aussergewöhnlich handliches Werkzeug

## Patentansprüche

1. Informationstechnisches Verfahren zum Entwickeln und Optimieren eines computergesteuerten realen Workflow-Prozesses aus diskreten Ereignissen, wobei ein Abbild des realen Prozesses durch ein Prozessmodell auf einem Display eines Computer darstellbar ist,
***dadurch gekennzeichnet, dass***
eine informationstechnische Schnittstelle vorgesehen ist, mittels welcher das Prozessmodell und der reale Prozess derart miteinander verbindbar sind, dass ein alternativer Betrieb des Prozessmodells ermöglicht wird, entweder
(a) getrennt und unabhängig vom realen Prozess zur Entwicklung, Gestaltung und/oder Optimierung des Prozessmodells, oder
(b) verbunden und gekoppelt mit dem realen Prozess
(b1) zur Implementierung diskreter Ereignisse aus dem Prozessmodell in den realen Prozess und/oder
(b2) zur Überwachung oder Kontrolle des ablaufenden realen Prozesses.

2. Informationstechnisches Verfahren nach Anspruch 1, ***dadurch***
***gekennzeichnet, dass***
die visuelle Darstellung des Prozessmodells aus Komponenten besteht, die diskrete Ereignisse visuell repräsentieren, wobei die Komponenten standardisiert sind oder standardisierte Elemente enthalten, die aus einem elektronischen Katalog abrufbar sind.

3. Informationstechnisches Verfahren nach Anspruch 1, ***dadurch***
***gekennzeichnet, dass***
die Darstellung des Prozessmodells animiert ist und in Form eines Java-Applets darstellbar und/oder exportierbar ist.

4. Informationstechnisches Verfahren nach Anspruch 2 oder 3, ***dadurch***
***gekennzeichnet, dass***
die visuell dargestellten Komponenten des Prozessmodells durch einfaches Verbinden den Objektfluss im Prozessmodell modellieren und/oder animieren.

5. Informationstechnisches Verfahren nach Anspruch 4, ***dadurch***
***gekennzeichnet, dass***
die visuell dargestellten Komponenten des Prozessmodells aus drei oder mehr standardisierten Basiselementen aufgebaut sind.

6. Informationstechnisches Verfahren nach mindestens einem der vorhergehenden Ansprüche, ***dadurch gekennzeichnet, dass***
- bereits existierende Komponenten des Prozessmodells von einem elektronischen Katalog über ein Netzwerk, insbesondere Intra-/Internet, zur Verfügung stehen, resp. dort abgelegt werden können und/oder
- sog. JavaBeans aus einer Sammlung solcher Software-Komponenten einfach in Komponenten eingebunden werden können.

7. Informationstechnisches Verfahren nach mindestens einem der vorhergehenden Ansprüche, ***dadurch gekennzeichnet, dass***
die Schnittstelle, über die das Prozessmodell und der reale Prozess miteinander koppelbar sind, als standardisierte Schnittstelle, insbesondere als XML-Schnittstelle ausgebildet ist.

8. Informationstechnisches Verfahren nach Anspruch 1, ***dadurch***
***gekennzeichnet, dass***
- die Schnittstelle bidirektional betreibbar ist, so dass insbesondere sowohl ein im Prozessmodell realisierter Prozess ganz oder teilweise in den realen Prozess integrierbar ist als auch ein realer Prozess ganz oder teilweise im Prozessmodell abbildbar ist.

9. Informationstechnisches Verfahren nach Anspruch 8, ***dadurch gekennzeichnet, dass***
- über die Schnittstelle das Prozessmodell zum Monitoring, insbesondere als Realzeitmonitor des Zustands und/oder Ablaufs des realen Prozesses einsetzbar ist.

10. Informationstechnisches Verfahren nach Anspruch 8, ***dadurch gekennzeichnet, dass***
- über die Schnittstelle das Prozessmodell die Steuerung des realen Prozesses teilweise oder vollständig übernehmen kann.

11. Computerprogramm zur Modellierung, Simulation, Optimierung und/oder Steuerung sogenannter diskreter Prozesse mit einem Prozessmodell, **dadurch gekennzeichnet, dass**
das in einem oder mehreren der Ansprüche 1 bis 10 **gekennzeichnet**e Verfahren durchgeführt wird, wenn das Programm auf einem Computer ausgeführt wird.

## Claims

1. Information technology method for developing and optimizing a computer-controlled real workflow process of discrete events, wherein a picture of the real process is representable by a process model on a display of a computer,
**characterized in**
**that** an information technology interface is provided by means of which the process model and the real process are connectable to each other in such a manner that the process model is operable alternatively either
a) separately from and independently of the real process for developing, designing and/or optimizing the process model
or
b) connected and coupled to the real process
(b1) for implementing discrete events of the process model into the real process
and/or
(b2) for monitoring or controlling the running real process.

2. Information technology method according to claim 1,
**characterized in**
**that** the visual representation of the process model consists of components visually representing discrete events, wherein the components are standardized or include standardized elements that are retrievable from an electronic catalogue.

3. Information technology method according to claim 1,
**characterized in**
**that** the representation of the process model is animated and representable and/or exportable in the form of a Java applet.

4. Information technology method according to claim 2 or 3,
**characterized in**
**that** the visually represented components of the process model form a model of and/or animate the object flow in the process model by simple connection.

5. Information technology method according to claim 4,
**characterized in**
**that** the visually represented components of the process model are made up of three or more standardized base elements.

6. Information technology method according to at least one of the preceding claims,
**characterized in**
- **that** already existing components of the process model are available from an electronic catalogue via a network, in particular intranet/internet, and can be deposited there, respectively, and/or
- so-called JavaBeans from a collection of such software components can simply be integrated into components.

7. Information technology method according to at least one of the preceding claims,
**characterized in**
**that** the interface via which the process model and the real process can be coupled to each other is configured as a standardized interface, in particular as an XML interface.

8. Information technology method according to claim 1,
**characterized in**
- **that** the interface is operable bi-directionally so that, in particular, both a process realized in the process model is entirely or partly integratable into the real process and a real process is entirely or partly representable in the process model.

9. Information technology method according to claim 8,
**characterized in**
- **that** the process model is usable - via the interface - for monitoring, in particular as a real-time monitor of the status and/or the course of the real process.

10. Information technology method according to claim 8,
**characterized in**
- **that** the process model can control the real process partly or completely via the interface.

11. Computer programme for modelling, simulating, optimizing and/or controlling so-called discrete processes with a process model,
**characterized in**
**that** the method **characterized in** one or more of the claims 1 to 10 is carried out when the programme is executed in a computer.

## Revendications

1. Procédé informatique pour le développement et l'optimisation d'un processus de suivi de travaux réel assisté par ordinateur, composé d'événements discrets, une image du processus réel étant représentable par un modèle de processus sur l'écran d'un ordinateur,
***caractérisé en* ce *qu'***
une interface informatique est prévue, au moyen de laquelle le modèle de processus et le processus réel sont reliables entre eux de manière à rendre possible une exploitation alternative du modèle de processus, soit
(a) séparément et indépendamment du processus réel pour le développement, la configuration et/ou l'optimisation du modèle de processus, soit
(b) relié et couplé au processus réel
(b1) pour l'implémentation d'événements discrets du modèle de processus dans le processus réel et/ou
(b2) pour la surveillance ou le contrôle du processus réel en cours d'exécution.

2. Procédé informatique selon la revendication 1, ***caractérisé en* ce *que***
la représentation visuelle du modèle de processus est formée de composants représentant visuellement les événements discrets, lesdits composants étant standardisés ou comprenant des éléments standardisés appelables depuis un catalogue électronique.

3. Procédé informatique selon la revendication 1, ***caractérisé en ce que***
la représentation visuelle du modèle de processus est animée et présentable et/ou exportable sous la forme d'une appelette Java.

4. Procédé informatique selon la revendication 2 ou 3, ***caractérisé en ce que***
les composants visuellement représentés du modèle de processus modélisent et/ou animent par liaison simple le flux d'objets dans le modèle de processus.

5. Procédé informatique selon la revendication 4, ***caractérisé en ce que***
les composants visuellement représentés du modèle de processus sont composés de trois éléments de base standardisés, ou plus.

6. Procédé informatique selon l'une au moins des revendications précédentes, **caractérisé *en ce que***
- des composants déjà existants du modèle de processus sont disponibles depuis un catalogue électronique via un réseau, notamment Intranet/Internet, ou peuvent y être archivés, et/ou
- des dits JavaBeans peuvent être facilement intégrés à des composants à partir d'une bibliothèque de tels composants logiciels.

7. Procédé informatique selon l'une au moins des revendications précédentes, ***caractérisé en ce que***
l'interface au moyen de laquelle le modèle de processus et le processus réel sont couplables entre eux est configurée comme interface standard, notamment comme interface XML.

8. Procédé informatique selon la revendication 1, ***caractérisé en ce que***
- l'interface est exploitable bi-directionnellement, de telle manière qu'il est en particulier possible à la fois d'intégrer totalement ou partiellement dans le processus réel un processus réalisé dans le modèle de processus, et de représenter totalement ou partiellement un processus réel dans le modèle de processus.

9. Procédé informatique selon la revendication 8, ***caractérisé en ce que***
- le modèle de processus est utilisable via l'interface notamment en tant que moniteur en temps réel pour la surveillance de l'état et/ou de l'exécution du processus réel.

10. Procédé informatique selon la revendication 8, ***caractérisé en* ce *que***
- le modèle de processus peut via l'interface assumer la commande partielle ou intégrale du processus réel.

11. Programme d'ordinateur pour la modélisation, la simulation, l'optimisation et/ou la commande de processus dits discrets avec un modèle de processus, **caractérisé en ce que** le procédé **caractérisé par** une ou plusieurs des revendications 1 à 10 est exécuté quand le programme est exécuté sur un ordinateur.
